# EUROPÄISCHE PATENTANMELDUNG

(11) **EP 0 551 802 A1**
(43) Veröffentlichungstag der Anmeldung: **21.07.1993**
(21) Anmeldenummer: 92850006.5
(22) Anmeldetag: 15.01.1992
(51) Int. Cl.: B60R 1/08

(54) **Toterwinkelerfassungsvorrichtung für Rückspiegel**

(71) Anmelder: Jonsson, Torn Ruben, S-136 65 Haninge (SE)
(72) Erfinder: Jonsson, Torn Ruben, S-136 65 Haninge (SE)
(74) Vertreter: Barnieske, Hans Wolfgang (SE)

(57) **Zusammenfassung**

Zwecks Verbesserung des Sichtfeldes im toten Winkel eines Wagenführers mit Hilfe eines Rückspiegels (1) ist eine konvexe Spiegelfläche in Form einer sfärischen Kalotte (5) mit einer zentralen planen Fläche (8) auf der planen oder schwach konvexen Spiegelglassfläche (2) des Rückspiegels angebracht und vorzugsweise in der Nähe einer Ecke des Spiegelglasses. Die Kalotte (5) hat einen Krümmungsradius von etwa 0,1 m und eine solche Grösse, dass die Kalotte bei beabsichtigtem Betrachtungsabstand einen Winkelα von zwischen etwa 2 bis etwa 6° umfasst.

## Beschreibung

Die vorliegende Erfindung bezieht sich auf eine Vorrichtung für Rückspiegel für Fahrzeuge um den toten Winkel zwischen dem Sichtfeld des üblichen Aussenrückspiegels und dem direkten Sichtfeld des Wagenführers auszuschalten.

Derartige Vorrichtungen an Rückspiegeln mit welchem man durch besondere optische Ausbildungen versucht hat den s.g. toten Winkel zu vermindern sind vorbekannt. Übliche äussere Rückspiegel sind meistenteils mit einer planen oder schwach konvexen Fläche ausgebildet. Zwecks Erhalt einer grösseren Sichtfläche sind s.g. Panoramarückspiegel verwendet worden, die durch eine konvexe Ausbildung und einer beträchtlich grösseren horisontalen Länge als gewöhnliche Rückspiegel eine gewisse Verbesserung des Sichtfeldes gegeben haben. Hierdurch besteht jedoch der Nachteil dass der Autofahrer rückwärtigen Verkehr nicht länger in natürlicher Grösse erfassen kann, wodurch eine Beurteilung des Abstandes zu rückwärtigen Fahrzeugen und deren Geschwindigkeit schwierig zu beurteilen ist. Man hat auch schon versucht das Sichtfeld durch Aufteilung des Spiegelglasses in einer äusseren Hälfte und einer inneren Hälfte zu vergrössern. Eine derartige Ausbildung führt jedoch zu ungewünschten Verzerrungen.

Zur Lösung des vorliegenden Problemes ist auch schon die Befestigung eines kleineren Spiegels auf dem normalen äusseren Rückspiegel vorgeschlagen worden, wobei die Spiegelfläche des kleineren Spiegels konvex ausgebildet ist und durch den hierdurch erhaltenen Weitwinkeleffekt den Totenwinkel abdeckt - vgl hierzu beispielsweise DE OS 2 139 431 insbesondere Fig. 3 c. Diese hier verwendete gänzlich konvex gewölbte Spiegelfläche ergibt jedoch ein unproportional verzerrtes Bild und resultiert damit leicht zu einer falschen Beurteilung des Abstandes zu einem im toten Winkel beobachteten Fahrzeug.

Zweck vorliegender Erfindung ist die Schaffung einer Vorrichtung an derartigen Rückspiegeln, die den toten Winkel abdeckt ohne zu Verzerrungen der Sichtfläche zu führen.

Zur Lösung dieses Problemes wird erfindungsgemäss eine Vorrichtung vorgeschlagen die eine Wölbung hat, die im Vergleich zu einem planen oder schwach konvexen Rückspiegel einen ausgesprochenen Weitwinkeleffekt ergibt und welche gegenüber ihrem Betrachtungsabstand ausreichend gross ist um eine sichere und korrekte Beobachtung eines im diesem Abstand befindlichen Fahrzeuges zu ergeben. Hierdurch wird der gewöhnlicherweise tote Winkel gut abgedeckt und der ausgesprochene Weitwinkeleffekt ergibt, dass besonders naheliegende im Totenwinkel befindliche Fahrzeuge gut observiert werden können während die Spiegelfläche des üblichen Rückspiegels für Betrachtungen auf längeren Abständen verwendet werden kann.

Erfindungsgemäss ist die spiegelnde konvexe Fläche als eine hauptsächlich sfärisch gewölbte Kalotte ausgebildet, deren zentrale Zentrumpartie aus einer planen Fläche besteht, wobei die zentrale plane Fläche etwa 5 - 17 %, vorzugsweise 7-10 % der totalen Spiegelfläche ausmacht. Hierdurch ist die Möglichkeit zu einer einfachen und billigen Herstellung gegeben und gleichzeitig überwindet man auch in bestmöglicherweise eine Bildverzerrung und auch ignorierbare optische Kanteneffekte an der Periferie der Kalotte.

Zweckmässig soll der Krümmungsradius der spiegelnden konvexen Fläche eine Grössenordnung von 0,1 m aufweisen und soll die Kalotte bei einem Betrachtungsabstand einen Winkel von zwischen 2 bis 6° aufnehmen. Mit "Grössenordnung" ist in diesem Zusammenhang der Intervall zwischen der Messzahl dividiert mit √3 und der Messzahl multipliziert mit √3 gemeint. Der Krümmungsradius R ist somit in einer Grössenordnung 0,1 m falls 0,1/√3 ≦ R och ≦ 0,1 · √3 oder mit anderen Worten R sollte zwischen etwa 0,05 m und zirka 0,16 m betragen. Weiterhin kann die obere Winkelgrenze von 6° zweckmässig für heutzutage verwendete Personenkraftwagen gelten bei welchen die Grösse der Rückspiegel meistens einen grösseren Winkel erlaubt ohne dass die gewöhliche Spiegelfläche des Rückspiegels allzu klein wird. Bei Lastkraftwagen und Omnibussen kann deshalb, falls gewünchst, die obere Winkelgrenze um einige Grade höher sein.

Bei einer ersten vorgezogenen Ausführungsform der Erfindung besteht die Vorrichtung aus einem Körper in Form einer hauptsächlich sfärisch gewölbten Kalotte mit einer zentralen planen Fläche, wobei die Vorrichtung auf einem planen oder schwach konvexen Spiegelglass eines üblichen Rückspiegels befestigt werden kann.

Hierbei ist zweckmässig dass der Körper eine Hinterseite hat, die wenigstens teilweise mit einer Klebmasseschicht bedeckt ist um hiermit in gewünschter Lage auf dem Spiegelglass eines üblichen Rückspiegels befestigt werden zu können und dass diese Klebmittelschicht in an sich bekannter Weise vor Werwendung durch eine abreissbare Schutzschicht abgedecht ist.

Alternativ kann die erfindungsgemässe Vorrichtung natürlich initial auf einem üblichen Rückspiegel befestigt sein. Durch eine derartige Befestigung, die im Zuge der Herstellung des Rückspiegel geschehen kann, ist natürlich eine bessere Haftung gewährleistet.

In beiden diesen Fällen besteht die mit einer zentralen planen Fläche versehene, sfärisch kalottförmige Vorrichtung zweckmässig aus einem blankpolierten Metall oder einer Metallschicht auf einem Träger aus beispielsweise Kunststoff oder Glass, wobei das Metall, falls gewünscht gegen chemische oder physikalische Einflüsse geschützt ist beispielsweise durch eine klare, permanente Schutzschicht.

In einer weiter alternativen Ausführungsform ist die mit einer zentralen planen Fläche versehene, sfärisch kalottförmige Vorrichtung einstückig mit einem planen oder schwachkonvexen Spiegelglass zu einem üblichen Rückspiegel geformt. Diese Ausführungsform erscheint als zweckmässig bei einer normalen Ausrüstung von neuen Fahrzeugen vor dem Verkauf.

Die Erfindung wird nachstehend an Hand der beiliegenden Zeichnungen näher veranschaulicht,
- Fig. 1: ist eine Perspektivansicht vom Fahrerplatz eines Personenwagens und zeigt eine vorgezogene Ausführungsform der Erfindung an einem äusseren Rück-spiegel
- Fig. 2: ist eine Seitenansicht der Vorrichtung in Form einer sfärischen Kalotte die am Spigelglass eines Rückspiegels befestigt ist
- Fig. 3: ist eine weitere Seitenansicht, die eine sfärische Kalotte zeigt, die auf der Hinterseite mit einer Klebstoffschicht und einer Schutzschicht versehen ist,
- Fig. 4: ist ein Querschnitt einer zweiten vorgezogenen Ausführungsform, bei welcher eine hauptsächlich sfärische Kalotte einstückig mit dem planen oder schwach gewölbten Spiegelglass eines üblichen Rückspiegels ausgebildet ist,

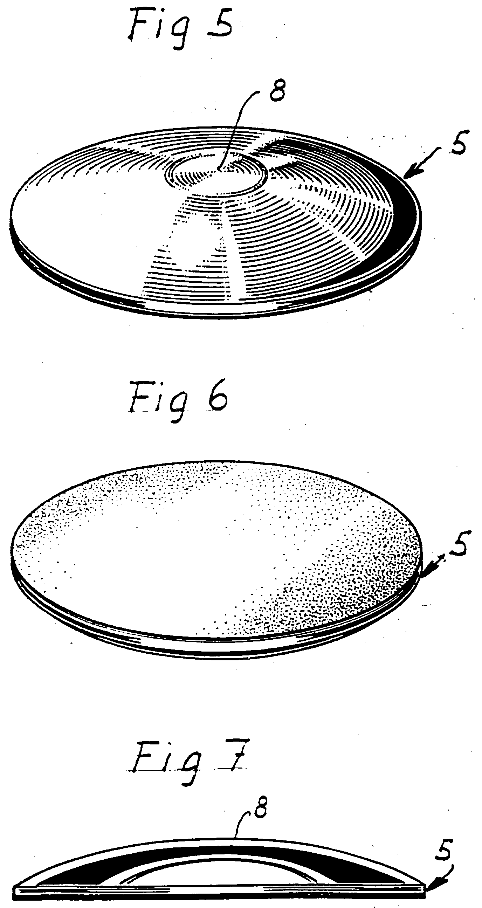

- Fig. 5: ist eine perspektivische Ansicht einer erfindungsgemässen Vorrichtung von oben, wobei die Vorrichtung als solche gezeigt wird,
- Fig. 6: ist eine untere Ansicht der in Fig. 5 gezeigten Vorrichtung und
- Fig.7: ist ein Querschnitt durch die Vorrichtung nach Fig. 5.

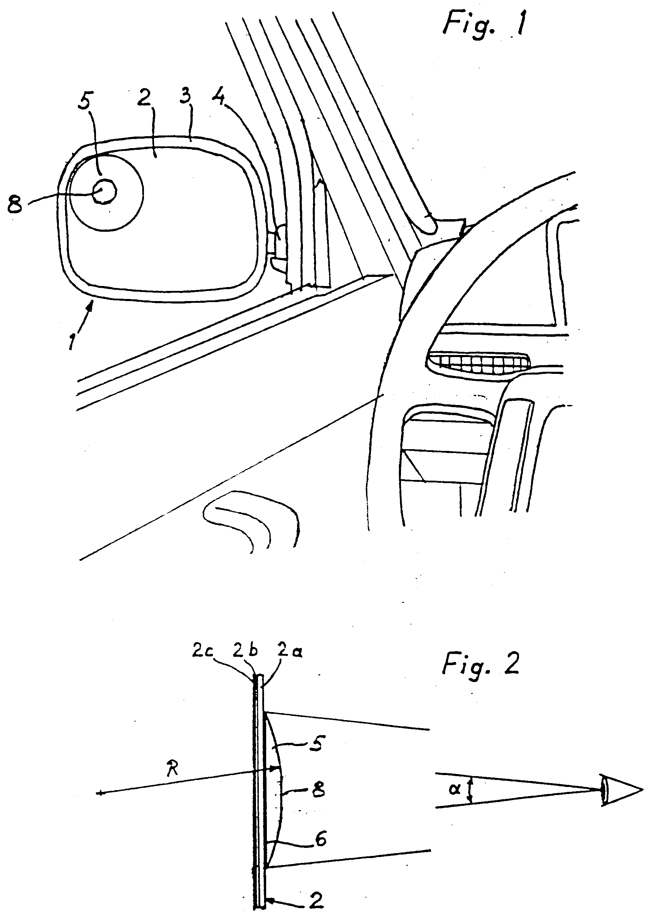

Der in Fig. 1 gezeigte Rückspiegel 1 ist ein äusserer Rückspiegel der am Türpfosten eines Personenwagens angeordnet ist. Der Rückspiegel 1 besteht aus einem planen oder schwach konvexen Spiegelglass 2 und einer Halterung 3, welche durch eine Befestingungsvorrichtung 4 am Bilpfosten in an sich bekannter Weise befestigt ist. Zwecks Verbesserung des Sichtfeldes nach hinten ist ein spiegelreflektierender Körper 5 an der oberen äusseren Ecke der Spiegelglasses 2 befestigt, wobei die spiegelnde Fläche des Körpers hauptsächlich die Form einer sfärischen Kalotte mit einer zentralen planen Fläche 8 hat, wobei diese zentrale plane Fläche 5 - 17 %, vorzugsweise 7 - 10 % der totalen Spiegelfläche ausmacht.

Der Wölbungsradius R (Fig. 2) der Kalottfläche ist von einer Grössenordnung von etwa 0,1 m und kann normalerweise zwischen etwa 0,05 m und etwa 0,16 m variieren.

Ein vorgezogener Wert liegt zwischen 0,09 bis 0,1. Bei Rückspiegeln für Personenkraftwagen hat die Kalotte 5 zweckmässig eine solche Grösse, dass diese beim beabsichtigten Betrachtungsabstand einen Winkelα von etwa 2° bis etwa 6° aufnimmt. Die obere Zahl ist zweckmässig für eine Kalotte die für einen Aussenrückspiegel vorgesehen ist und die untere Grenze zweckmässig für eine Kalotte die auf einem Innenrückspiegel angeordnet ist.

Aus Fig. 2 geht auch hervor dass die Kalotte oder der Körper 5 am Spiegelglass 2 mittels einer zwischenliegenden Schicht 6 eines Klebstoffes angeordnet ist und dass das Spiegelglass 2 aus einer planparallelen Glasscheibe 2 a besteht, deren Hinterseite mit einer Metallschicht 2 b bezogen ist, beispielsweise einer Silberschicht, die durch eine Schutzschicht 2 c abgedeckt ist.

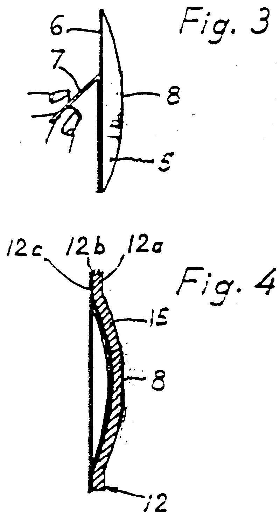

Wie aus Fig. 3 hervorgeht kann die Klebstoffschicht 6, die wenigstens einen Teil der Hinterseite der Kalotte abdeckt bis zur Aufklebung der Kalotte am Spiegelglass 2 durch eine abreissbare Schutzschicht 7 abgedeckt sein.

Bei der Ausführungsform der Erfindung, die in den Fig. 1 - 4 beschrieben ist besteht die Kalotte 5 zweckmässig aus blankpoliertem Metall oder aus einer Metallschicht auf einem Träger aus beispielsweise Kunststoff oder Glass. Das Metall ist gegebenenfalls gegen chemische oder physikalische Einflüsse einschliesslich nechanischer Beanspruchungen durch eine klare und nicht gezeigte permanent angebrachte Schutzschicht abgedeckt. Die Hinterseite der Kalotte ist zweckmässig plan ausgebildet wenn sie zu Befestigung gegen eine plane Spiegelglassfläche 2 vorgesehen ist bzw schwach konkav ausgebildet wenn sie zu Befestigung gegen eine schwach konvexe Spiegelglassfläche 2 vorgesehen ist.

In Fig. 4 ist eine Ausführungsform gezeigt, bei welcher der mit einer zentralen planen Fläche 8 versehene Kalotteil, der hier mit 15 bezeichnet ist, einstückig mit dem Spiegelglass ausgebildet ist, welches hier mit 12 bezeichet ist. Die spiegelnde Fläche des Kalotteiles 15 wird hierbei somit aus eine sfärischen kalottförmigen Partie der spiegelnden Metallschicht 12 b des Spiegelglasses 2 gebildet, die die Glassscheibe 12 a trägt und durch die Schutzschicht 12 c abgedeckt ist.

Die oben beschriebene erfindungsgemässe Vorrichtung kann natürlich auch für Rückspiegeln im Innern des Fahrzeuges vorgesehen werden.

## Patentansprüche

1. Vorrichtung an Rückspiegeln für Fahrzeuge bestehend aus einer spiegelnden konvexen Fläche (5) mit einer Wölbung (R) die - vergliechen mit einem üblichen planen oder schwach konvex ausgebildeten Rückspiegel - einen ausgesprochenen Weitwinkeleffekt ergibt und die eine gegenüber ihrem vorgesehenen Betrachtungsabstand ausreichende Grösse aufweist um eine sichere und korrekte Beobachtung von im toten Winkel befindlichen Fahrzeugen zu erzielen, dadurch **gekennzeichnet**, dass an spiegelnde konvexe Fläche (5) aus einer hauptsächlich sfärisch gewölbten Kalotte (5) mit einer zentralen planen Fläche (8) besteht, wobei die zentrale plane Fläche (8) etwa 5 - 17%, vorzugsweise 7 - 10 % der totalen Spiegelfläche umfasst.

2. Vorrichtung nach Anspruch 1, dadurch **gekennzeichnet**, dass der Wölbungsradius (R) der spiegelnden konvexen Fläche eine Grössenordnung von etwa 0,1 m hat.

3. Vorrichtung nach Anspruch 1 oder 2, dadurch **gekennzeichnet**, dass die Kalotte (5) bei einem vorgesehenen Betrachtungsabstand einen Winkelα von etwa 2° - 6° aufnimmt.

4. Vorrichtung nach den Ansprüchen 1 - 3, dadurch **gekennzeichnet**, dass die Kalotte (5) zur Befestigung an einem planen oder schwach gewölbten Spiegelglass (2) eines üblichen Rückspiegels (1) vorgesehen ist.

5. Vorrichtung nach Anspruch 4, dadurch **gekennzeichnet**, dass der Körper (5) eine Hinterseite aufweist, die wenigstens teilweise von einer Klebstoffschicht (6) und eine diese schützende abreissbare Schutzschicht (7) besteht.

6. Vorrichtung nach den Ansprüchen 1-5, dadurch **gekennzeichnet**, dass der Körper (5) aus blankpolierten Metall oder einer Metallschicht auf einem Träger aus beispielsweise Kunststoff oder Glass besteht, wobei das Metall gegebenenfalls gegen chemische und physikalische Beanspruchung durch eine klare permanente Schutzschicht abgedeckt ist.

7. Vorrichtung nach den Ansprüchen 1-3, dadurch **gekennzeichnet**, dass der Kalotteil (15) einstückig mit einem planen oder schwach konvexen Spiegelglass (12) eines üblichen Rückspiegels ausgeführt ist.
